# EUROPEAN PATENT SPECIFICATION

(11) **EP 1 626 804 B1**
(45) Date of publication and mention of the grant of the patent: **29.11.2006**
(21) Application number: 04733352.1
(22) Date of filing: 17.05.2004
(51) Int. Cl.: B01F 5/06, H01M 2/00, B01J 19/24

(54) **COMPACT MIXING DEVICE FOR HOMOGENISATION OF FLUID FLOW**
KOMPAKTER MIXER FÜR FLUIDSTRÖMUNGSHOMOGENISIERUNG
MELANGEUR COMPACT POUR LA HOMOGENISATION D'ECOULEMENT DU FLUIDE

(30) Priority: 19.05.2003 EP 03253123
(43) Date of publication of application: 22.02.2006
(73) Proprietor: SHELL INTERNATIONALE RESEARCH MAATSCHAPPIJ B.V., 2596 HR Den Haag (NL)
(72) Inventor: BRACHT, Maarten, NL-1031 CM Amsterdam (NL); CAANEN, Mathijs Joseph, NL-1031 CM Amsterdam (NL); HENDRIE, Kelvin John, NL-1031 CM Amsterdam (NL); KAART, Sander, NL-1031 CM Amsterdam (NL); VAN DER MEER, Jurjen Wietze, NL-1031 CM Amsterdam (NL); TEN BOSCH, Benedict Ignatius Maria, NL-1031 CM Amsterdam (NL)
(86) International application number: PCT/EP2004/050821
(87) International publication number: WO 2004/101125

(56) References cited:
- DE-C- 687 926
- SU-A- 1 128 970
- US-A- 4 313 680
- US-A1- 2003 007 419

## Description

The invention relates to a mixing device for the homogenisation of temperatures and/or concentrations in a fluid flow, to a module to be used in such mixing device, to an apparatus for forming syngas comprising such mixing device connected to a quench, and to a power generator comprising a fuel cell and such apparatus.

US 6,000,841 discloses a static mixer comprising a longitudinally elongated conduit and a central body and tabs positioned within the conduit, wherein the tabs are extending radially and inwardly from the conduit wall. The tabs redirect the longitudinal fluid flow in a radial direction. In addition, a pair of tip vortices are generated in the fluid flow that has passed the tabs. As a result, the fluid flow is mixed in the section of the conduit that extends downstream of the tabs and the central body. This mixer has a very large axial dimension in relation to its overall cross dimension.

US 4,313,680 discloses a reactor for mixing fluid components at relatively low flow rates. The reactor comprises a reaction chamber containing a plurality of spaced-apart, flow-converting members for directing the flow of fluid components along the central axis of the reaction chamber. These flow-converting members comprise a central opening. The reactor further includes a flow-directing element arranged downstream of each flow-converging member to divide and direct the body of fluid flow at right angels from the central axis of the reaction chamber. These flow-directing elements define and excentric passage in the reaction chamber. This reactor also has a very large axial dimension in relation to its overall cross dimension.

US 2003/0007419 discloses a fluid flow translocator device for dispersing temperature gradients found in laminar flow through heat exchangers and reactors. The flow translocator comprises a conduit and includes a disk disposed transverse the length of the conduit and having an outer profile conforming to the inner profile of the conduit to form a sealed fit. Arrays of slots extend about the disk for simultaneously directing the fluid core to the inner profile of the conduit and the outer perimeter flow toward the fluid core. The slots are staggered to maintain separation of the fluid core and the outer perimeter fluid during translocation.

The object of the present invention is to improve the prior art mixers. More specifically, the object of the present invention is to provide a relatively compact mixing device.

Accordingly, the invention relates to a mixing device (6) for the homogenisation of temperatures and/or concentrations in a fluid flow, comprising a hollow element (9), for conducting said fluid flow, which hollow element (9) comprises:
(a) a first insert (11) positioned within said hollow element (9) and defining an excentric passage (12);
(b) a second insert (13) positioned within said hollow element (9) upstream of the first insert, wherein said second insert (13) comprises a central opening (14);
(c) a third insert (16) positioned in the hollow element (9) downstream of said first insert (11) and said second insert (13), which third insert (16) comprises at least two openings (17), which are evenly distributed along a concentric circle within said third insert (16); and
(d) a fourth insert (19) positioned in said hollow element (9) between said first insert (11) and said third insert (16), wherein said fourth insert (19) comprises at least two radially extending first deflectors (20), in accordance with the features of claim 1.

The combination of the first insert defining an excentric passage and the second insert having a central opening enables the construction of a relatively compact mixing device, as the fluid can be mixed by radial deflection between the first and second insert. In addition, eddies may be generated along the periphery of the first insert and the periphery of the central opening in the second insert, which further improves the mixing of the fluid flow passing the inserts.

It is preferred that the area of the central opening is in the range of 50 to 150%, preferably 80 to 120% of the effective area of the excentric passage, and/or it is preferred that the second insert is positioned such that a radial passage for the fluid flow is formed between the first insert and the second insert, wherein the effective area of the radial passage, measured along the periphery of the central opening within the second insert, is in the range of 50 to 150%, preferably 80 to 120% of the area of the excentric passage. As a result, pressure losses within the fluid flow passing the first and second insert will be relatively low.

According to the invention, the second insert is located upstream of the first insert. This leads to a mixing device wherein the fluid flow is mixed due to the stepwise reduction of the typical distance over which temperature and concentration differences within the fluid flow exists. This stepwise reduction of the typical distance occurs at the central opening of the first insert, at the radial passage between the first and second insert, and at the excentric passage respectively.

The mixing device according to the invention also comprises a third insert positioned in the hollow element downstream of the first insert and the second insert, which third insert comprises at least two openings, which are evenly distributed along a concentric circle within the third insert. The fluid flow passing the third insert is mixed due to a redistribution within the fluid flow by the at least two openings, as the fluid flow is subdivided by the at least two openings in the third insert and subsequently recombined after passing the at least two openings in the third insert.

It is preferred that at least two of the openings in the third insert are provided with deflectors which have preferably the same outlines as the openings in the third insert, and which deflectors are extending radially from the third insert. This deflector further improves the redistribution within the fluid flow, and the provided deflectors may advantageously be manufactured from the plate of which the insert is manufactured itself, for example by means of laser cutting of the outline of the deflectors and by subsequently positioning of the deflectors by bending.

The mixing device according to the invention also comprises a fourth insert positioned in the hollow element between the first insert and the third insert, wherein the fourth insert comprises at least two radially extending first deflectors. Preferably, the fourth insert further comprises at least two radially extending second deflectors which are steeper than the at least two first deflectors of the fourth insert. Most preferably, the at least two first deflectors within the fourth insert are in register with the at least two openings in the third deflector. The fourth insert advantageously leads to a redistribution within the fluid flow between the first insert and the third insert of the mixing device, as the fourth insert subdivides the fluid flow in substantially separate flows which are mutually shifted in tangential direction and subsequently partially recombined at the openings in the third insert. Moreover, the lengths of the substantially separate flows between the inclined deflectors may be different from each other along the edges of the deflectors of the fourth insert, which leads to an improved shuffling of the substantially separate flows within the fluid flow.

The invention further pertains to a module for use in the mixing device according to the invention, comprising the four inserts as hereinbefore defined and a framework, such as a set of strips, wherein the inserts are fixed in the framework. In this manner, the module may be manufactured separately from the hollow element. It is preferred to wind an isolating blanket around the module before placing it within the hollow element.

The above-mentioned and other aspects and advantages of the invention will be apparent from the following description with reference to the drawings, which schematically show a preferred embodiment of the invention, and wherein:
Fig. 1 is a scheme of a set up of a power generator in which a mixing device according to the invention may be incorporated;
Fig. 2 is a sectional view of a preferred embodiment of the mixing device according to the invention;
Fig. 3 is an exploded view of the mixing device of Fig. 2.

Hereinafter, a brief explanation is given of a general set up of a power generator in which the mixing device according to the invention may advantageously be incorporated, followed by a description of the parts of a preferred embodiment and a detailed description of the mixing process within the preferred embodiment of the mixing device according to the invention.

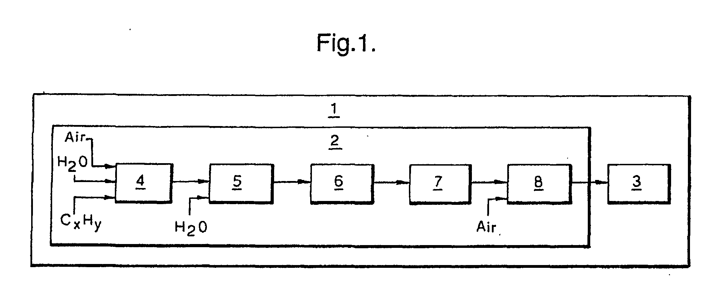

The mixing device according to the invention is intended for the homogenisation of temperatures and/or concentrations in a fluid flow, for example so-called syngas comprising vaporized water. The mixing device according to the invention may advantageously be incorporated in a power generator as schematically shown in Fig. 1, wherein hydrocarbons (CxHy) are processed. The processing of hydrocarbons results in electrical power and the generation of heat. This type of power generators may be applied in buildings to provide the electric main or backup power and to provide heat for the central heating system of the building.

The power generator may also be applied in electrically driven vehicles, for example cars, wherein the electric power is used to drive the electric main engine of the vehicle. Due to the fact that the necessary electric power demand of commercially available cars is high and the available space in the car for the power generator is limited, there is a need for compact power generators having compact components with high capacities. One of these components is a mixing device, to which this invention relates.

A power generator 1 as mentioned above is schematically shown in Fig. 1. This type of power generators generally comprises two parts, namely a fuel processor 2 wherein hydrocarbons are converted to hydrogen, and a fuel cell 3 wherein electricity is produced by electrochemical oxidation of the produced hydrogen.

The fuel processor 2 comprises a sequence of coupled components, which are generally a catalyst partial oxidator 4, a quench 5, a mixing device 6, a water gas shift section 7 and a preferential oxidator 8 respectively. During processing, the catalyst partial oxidator 4 produces hot syngas. In order to enable further processing, the hot syngas, produced by the catalyst partial oxidator 4, needs to be cooled by and mixed with vaporized water (H₂O), i.e. the water is injected in the hot syngas flow and vaporized by the quench, and subsequently mixed by mixing device 6.

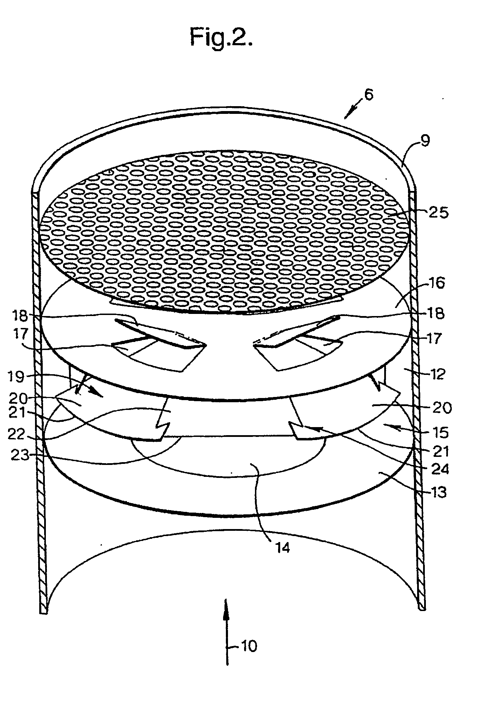

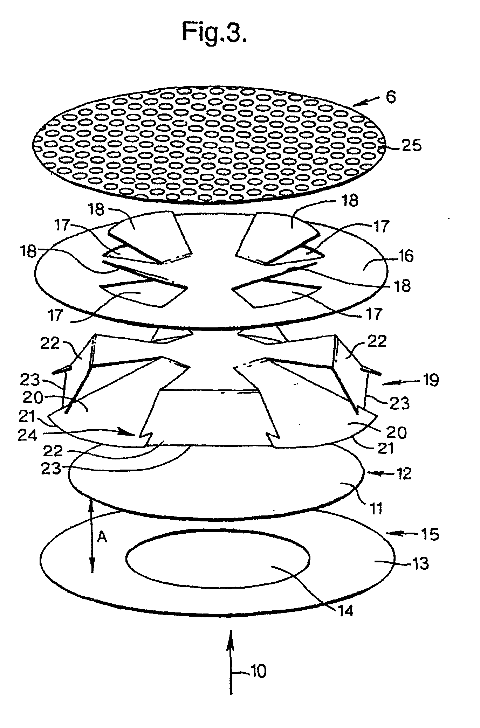

One preferred embodiment of the mixing device 6 is shown in Fig. 2 and 3. According to Fig. 2, the mixing device 6 comprises a hollow element such as a round tube 9 for conducting a fluid flow in a preferred direction as indicated by an arrow 10.

With reference to Fig. 2 and 3, the preferred embodiment of the mixing device 6 comprises a first insert 11 positioned within the tube 9 and having a circular periphery. The first insert 11 is made by laser cutting for example. As the outer diameter of the insert 11 is smaller than the inner diameter of tube 9, an excentric passage 12 having an effective area for the passage of the fluid flow is defined between the first insert 11 and the inner wall of the tube 9. The excentric passage 12 may also be defined in any other way, for example by means of a plate having multiple openings along its periphery.

As shown in Fig. 2 and 3, the preferred embodiment of the mixing device 6 further comprises a second insert 13 positioned within the tube 9 and upstream of the first insert 11. This second insert 13 comprises a central opening 14. Both the second insert 13 and the central opening 14 in the second insert 13 may have a circular periphery, and the second insert 13 is fixed to the inner wall of tube 9, for example by welding. The central opening 14 defines a passage for the fluid flow. As the first insert 11 and second insert 13 are substantially flat and positioned substantially parallel to each other at a particular distance A relative to each other, a radial passage 15 having an effective area for the fluid flow is formed between the first insert 11 and second insert 13. Herein the effective area of the radial passage 15 is defined perpendicular to the radial fluid flow. In this embodiment, the area of the central opening 14 in the first insert 11, and the effective area of the excentric passage 12, and the area of the radial passage 15 measured along the periphery of the central opening 14 in the second insert 13 are substantially equal to each other.

As shown in Fig. 2 and 3, the preferred embodiment of the mixing device 6 further comprises a third insert 16 positioned in the tube 9, at a downstream position of the first insert 11 and the second insert 13 and parallel thereto. This third insert 16 may advantageously be circular and comprises four openings 17 which are evenly distributed along a concentric circle within the third insert 16. The sum of the areas of the four openings 17 is two-third of the area of the central opening 14 in the third insert 16. The third insert 16 is made by laser cutting for example and is fixed to the inner wall of tube 2, for example by welding. The openings 17 in the third insert 16 are provided with radially extending deflectors 18 having the same outlines as the openings 17 in the third insert 16. The deflectors 18 may advantageously be manufactured from the same flat plate of which the third insert 16 is made, for example by laser cutting the outline of the deflectors 18 except for their innermost edges. The deflectors 18 are subsequently bend about the edges to their deflected position as shown in Fig. 2 and 3.

Referring to Fig. 2 and 3, the preferred embodiment of the mixing device further comprises a fourth insert 19 positioned within the tube 9 between the first insert 11 and third insert 16, and substantially parallel thereto. This fourth insert 19 comprises four radially extending first deflectors 20 each having an outer extending edge 21 and four radially extending second deflectors 22 each having an outer extending edge 23. The first deflectors 20 and the second deflectors 22 of the fourth insert 19 are staggered and adjacent to each other. In this embodiment, the second deflectors 22 are steeper than the first deflectors 20. In addition, the outer extending edges 21 of the first deflectors 20 extend in radial direction with regard to the outer extending edges 23 of the second inserts 22. The staggered first deflectors 20 and second deflectors 22 of the fourth insert 19 are kept in position with respect to each other by means of plug-and-socket connections 24 along the adjacent edges of the deflectors. The fourth insert 19 is designed such, that the fourth insert 19 may be formed out of one flat plate by means of laser cutting for example. Hereby the outlines of the first deflectors 20 and the second deflectors 22, as well as the outlines of the slots of the plug-and-socket connections 24 may be cut within the same cutting cycle during manufacturing of the fourth insert 19. After cutting, the first deflectors 20 and the second deflectors 22 are formed by means of bending and by plugging of the plug-and-socket connections 24. The first insert 11 is advantageously fixed to the second deflectors 22 of the fourth insert 19 along the outer extending edges 23 of the second deflectors 22 of the fourth insert 19, for example by welding. In addition, the outer extending edges 21 of the first deflectors 20 of the fourth insert 19 coincide with the inner wall of the tube 9 and are therefore fixed to the inner wall of the tube 9, for example by welding. As the outer extending edges 23 of the second deflectors 22 of the fourth insert 19 coincides with the periphery of the first insert 11, and as the outer extending edges 23 of the second inserts 22 of the fourth insert 19 coincide with the inner wall of the tube 9, the excentric passage 12 defined by the first insert 11 is subdivided into eight axial sub-passages downstream of the first insert 11. In addition, the fourth insert 19 is positioned such, that the first deflectors 20 of the fourth inserts are in register with the four openings 17 in the third insert 16.

With reference to Fig. 2 and 3, the preferred embodiment of the mixing device 6 further comprises a perforated plate 25, which is positioned downstream of the third insert 16. This perforated plate 25 is advantageously fixed to the inner wall of the tube 9, for example by welding. The typical open area of the perforated plate may be 25%.

In operation, the mixing process within the preferred embodiment is as follows:

A fluid flow is conducted by the tube 9 in the direction as indicated by arrow 10 in Fig. 2 and 3. The fluid flow subsequently passes the central opening 14 in the first insert 11, the radial passage 15 area between the first insert 11 and the second insert 13, the excentric passage 12 defined by the first insert 11, the first deflectors 20 and/or second deflectors 22 of the fourth insert 19, the openings 17 in the fourth insert 19, the deflectors 18 at the third insert 16, and the perforated plate 25.

The fluid flow passing the first insert 11 and the second insert 13 is mixed by the radial deflection of the fluid flow between the first insert 11 and second insert 13, as well as by the generation of eddies in the fluid flow along the periphery of the first insert 11 and along the periphery of the central opening 14 in the second insert 13, as well as by the subsequent stepwise reductions of the typical distance over which temperatures and concentration differences exists. This stepwise reductions of the typical distance occurs at the central opening 14 of the first insert 11, at the radial passage 15 area between the first insert 11 and the second insert 13, and at the excentric passage 12 defined by the first insert 11 respectively. In this preferred embodiment the area of the central opening 14 in the first insert 11, and the effective area of the excentric passage 12, and the effective area of the radial passage 15 measured along the periphery of the central opening 14 in the second insert 13 are substantially equal to each other. As a result, pressure losses within the fluid flow passing the first and second insert are relatively low.

After passing the first insert 11, a redistribution within the fluid flow takes place, as the fluid flow is subdivided into eight substantially separate flows by the radially extending first deflectors 20 and the second deflectors 22 of the fourth insert 19. Due to the mutually different inclinations of the first deflectors 20 and the second deflectors 22 of the fourth insert 19, and due to the position of the openings 17 with regards to the third insert 16, the substantially separate flows are mutually shifted in tangential direction and subsequently partially recombined at the openings 17 in the third insert 16. As the lengths of the substantially separate flows may be different from each other along the inclined edges of the first deflectors 20 and second deflectors 22 of the fourth insert 19, the shuffling of the substantially separate flows within the fluid flow is even further improved.

After passing the openings 17 in the third insert 16, the partially recombined fluid flows guided by the openings 17 are recombined. Moreover, the fluid flow is further redistributed by the radial deflection of the fluid flow by the radially extending deflectors 18 of the third insert 16.

Finally, the fluid flow passes the perforated plate 25 of the mixing device 6, whereby the redistribution within the fluid flow is enhanced as well.

As should be understood, the mixing device 6 according to the invention mixes a fluid flow by means of a combination radial deflection of the fluid flow, by stepwise decreases of the typical distance over which temperature and concentration in the fluid flow exists, by redistribution of substantially separate flows within the fluid flow, and by the generation of eddies.

In the described preferred embodiment of the mixing device 6, the third insert 16 comprises four openings 17 provided with four deflectors 18, and the fourth insert 19 comprises four first deflectors 20 and four second deflectors 22. Good mixing results are also obtained with two or three such groups, but four groups is preferred.

In the described preferred embodiment of the mixing device 6, the sum of the areas of the four openings 17 in the third insert 16 is two-third of the area of the central opening 14 in the second insert 13. In general it is preferred that the sum of the areas of the at least two openings in the third insert is 15 to 115%, and more preferably 45 to 85% of the area of the central opening in the second insert.

In the described preferred embodiment of the mixing device 6, the second insert 13, the third insert 16, the fourth insert 19 and the perforated plate 25 were fixed to the inner wall of the tube 9, for example by means of welding. It is also possible to fix the inserts and the perforated plate within any kind of framework, such as a set of strips or the like, whereby a module is formed. The module may be embedded within the tube 9. In order to ensure a sufficient isolation between the inserts of the module and the inner wall of the tube 9, it is preferred that the module is wrapped in an isolating blanked before placing the module in the tube.

As a matter of course, the mixing device according to the invention is not restricted to the particular embodiment shown in the drawings and described hereinbefore, but may be varied in different manners within the scope of the invention, as defined by the claims.

## Claims

1. Mixing device (6) for the homogenisation of temperatures and/or concentrations in a fluid flow, comprising a hollow element (9), for conducting said fluid flow, which hollow element (9) comprises:
(a) a first insert (11) positioned within said hollow element (9) and defining an excentric passage (12);
(b) a second insert (13) positioned within said hollow element (9) upstream of the first insert, wherein said second insert (13) comprises a central opening (14);
**characterized in that** said hollow element (9) further comprises:
(c) a third insert (16) positioned in the hollow element (9) downstream of said first insert (11) and said second insert (13), which third insert (16) comprises at least two openings (17), which are evenly distributed along a concentric circle within said third insert (16); and
(d) a fourth insert (19) positioned in said hollow element (9) between said first insert (11) and said third insert (16), wherein said fourth insert (19) comprises at least two radially extending first deflectors (20).

2. Mixing device (6) according to claim 1, wherein the area of the central opening (14) is in the range of 50 to 150%, preferably 80 to 120% of the effective area of the excentric passage (12).

3. Mixing device (6) according to claim 1 or 2, wherein said second insert (13) is positioned such that a radial passage (15) for said fluid flow is formed between said first insert (11) and said second insert (13), wherein the effective area of the radial passage (15), measured along the periphery of said central opening (14) within said second insert (13), is in the range of 50 to 150%, preferably 80 to 120% of the area of the excentric passage (12).

4. Mixing device (6) according to any one of the preceding claims, wherein at least two of the openings (17) in said third insert (16) are provided with deflectors (18) which have preferably the same outlines as the openings (17) in said third insert (16), and which deflectors (18) are extending radially from said third insert (16).

5. Mixing device (6) according to any one of the preceding claims, wherein said fourth insert (19) further comprises at least two radially extending second deflectors (22) which are steeper than said at least two first deflectors (20) within said fourth insert (19).

6. Mixing device (6) according to any one of the preceding claims, wherein said at least two first deflectors (20) are in register with the at least two openings (17) in said third insert (16).

7. Mixing device (6) according to any one of the preceding claims comprising a perforated plate (25) positioned in said hollow element (9) downstream of said third insert (16).

8. Mixing device (6) according to any one of the preceding claims, wherein the sum of the areas of said at least two openings (17) in said third insert (16) is 15 to 115%, preferably 45 to 85% of the area of the central opening (14) in said second insert (13).

9. Mixing device (6) according to any one of claims 5 to 8, wherein said fourth insert (19) is formed out of one piece, and wherein said first deflectors (20) and said second deflectors (22) are staggered and adjacent to each other, and kept in position with respect to each other by means of plug-and-socket connections (24) along the adjacent edges of said deflectors.

10. Module for use in the mixing device according to any one of the preceding claims, comprising said first insert, (11) second insert (13), a third insert, and a fourth insert and a framework, such as a set of strips, wherein said inserts (11, 13) are fixed in the framework.

11. Apparatus (2) for forming syngas, including a quench (5) and the mixing device (6) according to any one of the preceding claims, wherein said mixing device (6) is connected to the quench (5).

12. Power generator (1) comprising at least a fuel cell (3) and the apparatus (2) for forming syngas according to claim 11.

## Patentansprüche

1. Mischvorrichtung (6) zur Homogenisierung von Temperaturen und / oder Konzentrationen in einer Fluidströmung mit einem Hohlelement (9) zum Leiten der Fluidströmung, wobei das Hohlelement (9) umfasst:
(a) einen ersten Einsatz (11), der innerhalb des Hohlelements (9) angeordnet ist und einen exzentrischen Durchgang (12) definiert;
(b) einen zweiten Einsatz (13), der innerhalb des Hohlelements (9) oberstromig von dem ersten Einsatz angeordnet ist, wobei der zweite Einsatz (13) eine zentrale Öffnung (14) umfasst;
**dadurch gekennzeichnet, dass**
das Hohlelement (9) ferner umfasst:
(c) einen dritten Einsatz (16), der in dem Hohlelement (9) unterstromig von dem ersten Einsatz (11) und dem zweiten Einsatz (13) angeordnet ist, wobei der dritte Einsatz (16) zumindest zwei Öffnungen (17) umfasst, die gleichmäßig um einen konzentrischen Kreis innerhalb des dritten Einsatzes (16) herum verteilt sind; und
(d) einen vierten Einsatz (19), der in dem Hohlelement (9) zwischen dem ersten Einsatz (11) und dem dritten Einsatz (16) angeordnet ist, wobei der vierte Einsatz (19) zumindest zwei sich radial erstreckende erste Deflektoren (20) umfasst.

2. Mischvorrichtung (6) nach Anspruch 1, wobei die Fläche der zentralen Öffnung (14) im Bereich von 50 bis 150 %, vorzugsweise 80 bis 120 % der Wirkfläche des exzentrischen Durchgangs (12) liegt.

3. Mischvorrichtung (6) nach Anspruch 1 oder 2, wobei der zweite Einsatz (13) derart angeordnet ist, dass ein radialer Durchgang (15) für die Fluidströmung zwischen dem ersten Einsatz (11) und dem zweiten Einsatz (13) gebildet ist, wobei die Wirkfläche des radialen Durchgangs (15), gemessen entlang des Umfangs der zentralen Öffnung (14) innerhalb des zweiten Einsatzes (13) im Bereich von 50 bis 150 %, vorzugsweise 80 bis 120 % der Wirkfläche des exzentrischen Durchgangs (12) liegt.

4. Mischvorrichtung (6) nach einem der vorhergehenden Ansprüche, wobei zumindest zwei von den Öffnungen (17) in dem dritten Einsatz (16) mit Deflektoren (18) versehen sind, die vorzugsweise dieselben Konturen aufweisen wie die Öffnungen (17) in dem dritten Einsatz (16), und wobei sich die Deflektoren (18) radial von dem dritten Einsatz (16) erstrecken.

5. Mischvorrichtung (6) nach einem der vorhergehenden Ansprüche, wobei der vierte Einsatz (19) ferner zumindest zwei sich radial erstreckende Deflektoren (22) aufweist, die steiler als die zumindest zwei ersten Deflektoren (20) innerhalb des vierten Einsatzes (19) sind.

6. Mischvorrichtung (6) nach einem der vorhergehenden Ansprüche, wobei die zumindest zwei ersten Deflektoren (20) mit den zumindest zwei Öffnungen (17) in dem dritten Einsatz (16) ausgerichtet sind.

7. Mischvorrichtung (6) nach einem der vorhergehenden Ansprüche, umfassend eine perforierte Platte (25), die innerhalb des Hohlelements (9) unterstromig von dem dritten Einsatz (16) angeordnet ist.

8. Mischvorrichtung (6) nach einem der vorhergehenden Ansprüche, wobei die Summe der Flächen der ersten zumindest zwei Öffnungen (17) in dem dritten Einsatz (16) 15 bis 115 %, vorzugsweise 45 bis 85 % der Fläche der zentralen Öffnung (14) in dem zweiten Einsatz (13) beträgt.

9. Mischvorrichtung (6) nach einem der Ansprüche 5 bis 8, wobei der vierte Einsatz (19) aus einem Stück gebildet ist und wobei die ersten Deflektoren (20) und die zweiten Deflektoren (22) gegeneinander versetzt und nebeneinander angeordnet sind und mit Hilfe von Steckanschlüssen (24) entlang der benachbarten Kanten der Deflektoren in Position in Bezug zueinander gehalten sind.

10. Modul zur Verwendung in der Mischvorrichtung nach einem der vorhergehenden Ansprüche, umfassend einen ersten Einsatz (11), einen zweiten Einsatz (13), einen dritten Einsatz und einen vierten Einsatz und einen Rahmen wie z. B. einen Satz von Leisten, wobei die Einsätze (11, 13) in dem Rahmen befestigt sind.

11. Vorrichtung (2) zur Bildung von Syngas, umfassend eine Quencheinrichtung (5) und die Mischvorrichtung (6) nach einem der vorhergehenden Ansprüche, wobei die Mischvorrichtung (6) mit der Quencheinrichtung (5) verbunden ist.

12. Energieerzeuger (1), umfassend zumindest eine Brennstoffzelle (3) und die Vorrichtung (2) zur Bildung von Syngas nach Anspruch 11.

## Revendications

1. Dispositif de mélange (6) pour l'homogénéisation de températures et/ou de concentrations dans un écoulement de fluide, comprenant un élément creux (9), pour acheminer ledit écoulement de fluide, lequel élément creux (9) comprend :
(a) un premier élément rapporté (11) positionné à l'intérieur dudit élément creux (9) et définissant un passage excentrique (12);
(b) un deuxième élément rapporté (13) positionné à l'intérieur dudit élément creux (9) en amont du premier élément rapporté, dans lequel ledit élément rapporté (13) comprend une ouverture centrale (14);
**caractérisé en ce que** ledit élément creux (9) comprend en outre:
(c) un troisième élément rapporté (16) positionné dans l'élément creux (9) en aval dudit premier élément rapporté (11) et dudit deuxième élément rapporté (13), lequel troisième élément rapporté (16) comprend au moins deux ouvertures (17), qui sont distribuées de manière égale le long d'un cercle concentrique à l'intérieur dudit troisième élément rapporté (16); et
(d) un quatrième élément rapporté (19) positionné dans ledit élément creux (9) entre ledit premier élément rapporté (11) et ledit troisième élément rapporté (16), dans lequel ledit quatrième élément rapporté (19) comprend au moins deux premiers déflecteurs s'étendant radialement (20).

2. Dispositif de mélange (6) selon la revendication 1, dans lequel la surface de l'ouverture centrale (14) se situe dans la plage de 50 à 150%, de préférence de 80 à 120% de la surface effective du passage excentrique (12).

3. Dispositif de mélange (6) selon la revendication 1 ou 2, dans lequel ledit deuxième élément rapporté (13) est positionné de sorte qu'un passage radial (15) pour ledit écoulement de fluide soit formé entre ledit premier élément rapporté (11) et ledit deuxième élément rapporté (13), dans lequel la surface effective du passage radial (15), mesurée le long de la périphérie de ladite ouverture centrale (14) à l'intérieur dudit deuxième élément rapporté (13), se situe dans la plage de 50 à 150%, de préférence de 80 à 120% de la surface du passage excentrique (12).

4. Dispositif de mélange (6) selon l'une quelconque des revendications précédentes, dans lequel au moins deux des ouvertures (17) dans ledit troisième élément rapporté (16) sont munies de déflecteurs (18), qui ont de préférence les mêmes contours que les ouvertures (17) dudit troisième élément rapporté (16), et lesquels déflecteurs (18) s'étendent radialement dudit troisième élément rapporté (16).

5. Dispositif de mélange (6) selon l'une quelconque des revendications précédentes, dans lequel ledit quatrième élément rapporté (19) comprend en outre au moins deux déflecteurs s'étendant radialement (22) qui sont plus raides que lesdits au moins deux déflecteurs (20) à l'intérieur dudit quatrième élément rapporté (19).

6. Dispositif de mélange (6) selon l'une quelconque des revendications précédentes, dans lequel lesdits au moins deux premiers déflecteurs (20) sont en registre avec les au moins deux ouvertures (17) dudit troisième élément rapporté (16).

7. Dispositif de mélange (6) selon l'une quelconque des revendications précédentes, comprenant une plaque perforée (25) positionnée dans ledit élément creux (9) en aval dudit troisième élément rapporté (16).

8. Dispositif de mélange (6) selon l'une quelconque des revendications précédentes, dans lequel la somme des surfaces desdites au moins deux ouvertures (17) dudit troisième élément rapporté (16) est de 15 à 115%, de préférence de 45 à 85% de la surface de l'ouverture centrale (14) dudit deuxième élément rapporté (13).

9. Dispositif de mélange (6) selon l'une quelconque des revendications 5 à 8, dans lequel ledit quatrième élément rapporté (19) est formé d'une seule pièce et dans lequel lesdits premiers déflecteurs (20) et lesdits deuxièmes déflecteurs (22) sont disposés en quinconce et adjacents l'un par rapport à l'autre et maintenus en position l'un par rapport à l'autre à l'aide de raccords mâle et femelle (24) le long des bords adjacents desdits déflecteurs.

10. Module pour usage dans le dispositif de mélange selon l'une quelconque des revendications précédentes, comprenant ledit premier élément rapporté (11), ledit deuxième élément rapporté (13), un troisième élément rapporté et un quatrième élément rapporté et un cadre, notamment sous la forme d'un jeu de bandes, dans lequel lesdits éléments rapportés (11, 13) sont fixés dans le cadre.

11. Appareil (2) pour former du gaz de synthèse, notamment un dispositif de trempe (5) et le dispositif de mélange (6) selon l'une quelconque des revendications précédentes, dans lequel ledit dispositif de mélange (6) est raccordé au dispositif de trempe (5).

12. Générateur électrique (1) comprenant au moins une pile à combustible (3) et l'appareil (2) pour former du gaz de synthèse selon la revendication 11.
